# EUROPÄISCHE PATENTSCHRIFT

(11) **EP 2 944 433 B1**
(45) Veröffentlichungstag und Bekanntmachung des Hinweises auf die Patenterteilung: **14.06.2017**
(21) Anmeldenummer: 15165254.2
(22) Anmeldetag: 27.04.2015
(51) Int. Cl.: B25F 5/02

(54) **HANDWERKZEUGMASCHINE**
MANUAL MACHINE TOOL
MACHINE-OUTIL PORTATIVE

(30) Priorität: 16.05.2014 DE 102014209354; 08.09.2014 DE 102014217863
(43) Veröffentlichungstag der Anmeldung: 18.11.2015
(73) Patentinhaber: ROBERT BOSCH GMBH, 70442 Stuttgart (DE)
(72) Erfinder: Bantle, Florian, 73344 Gruibingen (DE)

(56) Entgegenhaltungen:
- EP-A2- 1 510 299
- EP-A2- 2 589 465
- DE-A1-102012 206 884
- DE-A1-102012 220 423
- DE-U1-202006 018 837
- JP-A- 2002 154 073
- US-A- 5 365 155
- US-A1- 2004 141 818

## Beschreibung

Die vorliegende Erfindung betrifft eine Handwerkzeugmaschine, insbesondere einen Stabschrauber, einen Bohrschrauber oder einen Akku-Bohrschrauber, nach dem Oberbegriff des Anspruchs 1, mit einer in Rotation versetzbaren Werkzeugaufnahme, die über ein Getriebe von einem Antriebsmotor antreibbar ist.

### Stand der Technik

Handwerkzeugmaschinen wie zum Beispiel Stabschrauber, Akku-Bohrschrauber oder Bohrmaschinen sind aus dem Stand der Technik bekannt und weisen ein Gehäuse auf mit wenigstens einem Schalter, mittels welchem eine Ansteuerung des Getriebes und/oder des Motors ermöglicht wird.

DE 8604458 U1 offenbart beispielsweise ein Handwerkzeug mit einem Gehäuse, wobei das Gehäuse einen Griff mit einem ersten Schalter zur Motoransteuerung und einem zweiten Schalter zur Getriebeansteuerung aufweist. Eine Antriebswelle erstreckt sich nach vorne aus dem Getriebegehäuse heraus. Bei derartigen Handwerkzeugmaschinen kann die Drehrichtung der Antriebswelle über den zweiten Schalter eingestellt werden. Dabei wird über den außen am Gehäuse angeordneten zweiten Schalter ein Schaltelement im Inneren des Gehäuses angesteuert. Der zweite Schalter ist somit unabhängig vom ersten Schalter. Alternativ kann dieser zweite, für die Drehrichtung zuständige Schalter auch ein Teil des ersten Schalters, mittels dem die Motordrehzahl angesteuert wird, sein. Dabei erweist es sich als nachteilig, dass bei beiden Varianten die Ansteuerrichtung des zweiten Schalters weitgehend quer zur Rotationsachse der Handwerkzeugmaschine erfolgt, wodurch eine intuitive Zuordnung von Schalterposition und Drehrichtung nicht gegeben ist. Entsprechend wird versucht, die Drehrichtung des Getriebes mittels Symbolen am Gehäuse der Handwerkzeugmaschine oder unmittelbar am zweiten Schalter anzuzeigen, wobei sich diese Positionierung als nachteilig erweist, da ein Ablesen dieser Symbole je nach Umgreifen des Handgriffes während des Betriebs nicht oder nur erschwert möglich ist. Ähnliche Handwerkzeuge sind auch aus DE 10 2012 220 423 und EP 1 510 299 bekannt.

### Offenbarung der Erfindung

Aufgabe der Erfindung ist es, die oben genannten Nachteile zu verbessern und eine Handwerkzeugmaschine bereitzustellen, die ein leichtes Bedienen in Bezug auf die Einstellung der Drehrichtung gewährleistet und dabei kostengünstig, flexibel, verschleißarm und langlebig ist.

Diese Aufgabe wird durch eine Handwerkzeugmaschine gemäß Anspruch 1 gelöst. Vorteilhafte Ausgestaltungen, Varianten und Weiterbildungen der Erfindung sind den Unteransprüchen zu entnehmen.

Eine derartige Handwerkzeugmaschine umfasst ein Gehäuse mit einem Handgriff, ein in dem Gehäuse angeordnetes Getriebe zur Übertragung eines von einem Antriebsmotor erzeugten Drehmomentes auf eine um eine Drehachse x rotierende Werkzeugaufnahme, sowie eine in dem Gehäuse angeordnete erste Schaltereinheit zur Steuerung des Antriebsmotors mit einem ersten Schaltelement und einem zweiten Schaltelement zur Bedienung der Schaltereinheit. Verschiedene Steuergrößen des Antriebsmotors, wie beispielsweise die Einstellung von Drehzahl, Drehmoment o. dgl. werden über das erste Schaltelement und zweite Schaltelement vom Bediener beeinflusst. Über das zweite Schaltelement ist die Drehrichtung des Antriebsmotors regelbar, wobei das zweite Schaltelement bei einer Betätigung eine Linearbewegung im Wesentlichen parallel zur Drehachse x ausführt. Hierdurch wird direkt eine klare und intuitive Zuordnung der Schalterposition des zweiten Schaltelementes zu der daraus resultierenden Arbeitsrichtung, bzw. Drehrichtung der Werkzeugaufnahme erreicht, auch bei einer ungünstigen Haltung der Handwerkzeugmaschine, beispielsweise wenn der Schrauber kopfüber oder seitlich gehalten wird. Die Anordnung gewährleistet somit ein leichtes Bedienen in Bezug auf die Einstellung der Drehrichtung, wobei eine erfindungsgemäße Handwerkzeugmaschine durch die Linearbewegung verschleißarm, langlebig und dabei einfach und sicher in der Handhabung ist.

Bevorzugterweise rastet das zweite Schaltelement in wenigstens zwei Positionen ein, wobei eine erste Position einer ersten Drehrichtung des Antriebsmotors entspricht, wobei die erste Drehrichtung des Antriebsmotors einer ersten Drehrichtung der Werkzeugaufnahme zugeordnet ist.

Dabei ist es besonders vorteilhaft, wenn eine zweite Position einer zweiten Drehrichtung des Antriebsmotors entspricht, wobei die zweite Drehrichtung des Antriebsmotors einer zweiten Drehrichtung der Werkzeugaufnahme zugeordnet ist.

Vorzugsweise liegt die erste Position gegenüber der zweiten Position näher an der Werkzeugaufnahme, wobei die erste Drehrichtung der Werkzeugaufnahme eine Rechtsdrehung der Werkzeugaufnahme bewirkt. Entsprechend liegt in einer besonders bevorzugten Ausgestaltung die zweite Position gegenüber der ersten Position weiter entfernt von der Werkzeugaufnahme, wobei die zweite Drehrichtung der Werkzeugaufnahme eine Linksdrehung der Werkzeugaufnahme bewirkt.

Das zweite Schaltelement rastet bevorzugterweise in einer dritten Position ein, wobei in der dritten Position die Bedienung der ersten Schaltereinheit über das erste Schaltelement gesperrt ist. Dabei liegt in einer besonders bevorzugten Ausgestaltung die dritte Position zwischen der ersten Position und der zweiten Position. Vorteilhafterweise kann die Sperrung des ersten Schaltelements und/oder der ersten Schaltereinheit in der dritten Position des zweiten Schaltelements elektrisch, elektronisch und/ oder mechanisch erfolgen.

Bevorzugterweise betätigt das zweite Schaltelement einen Drehrichtungsschalter, wobei der Drehrichtungsschalter in einer vorteilhaften Ausgestaltung in die erste Schaltereinheit integriert ist.

In einer bevorzugten Ausführungsform ist das zweite Schaltelement an der Gehäuseaußenseite angebracht und mit einem Schaltsteg im Gehäuseinneren verbunden, wobei der Schaltsteg mit dem Drehrichtungsschalter in Eingriff steht und im Wesentlichen parallel zur Drehachse x bewegt werden kann. Dabei kann der Eingriff über ein Verbindungselement erfolgen, welches im Wesentlichen parallel zur Drehachse x bewegbar ist.

Bevorzugterweise kann der Eingriff über eine Drehscheibe erfolgen, die um eine Drehachse y drehbar ist. Alternativ kann der Eingriff über eine Schalterwippe erfolgen, die quer zur Drehachse x bewegbar ist, so dass die Umwandlung der Längsbewegung des Schaltsteges in die Querbewegung der Schalterwippe über eine Kulissenschaltung erfolgt.

In einer alternativen Ausführungsform kann das zweite Schaltelement eine zweite Schaltereinheit bedienen, welche die Position des zweiten Schaltelementes elektronisch an die erste Schaltereinheit übermittelt, wobei die Position des zweiten Schaltelements von einem Sensor, insbesondere einem induktiv, kapazitiv, magnetisch und/oder optisch arbeitenden Sensor erfassbar ist.

Grundsätzlich ist es besonders vorteilhaft, wenn das zweite Schaltelement entlang einer gemeinsamen, zur Drehachse x im Wesentlichen parallelen Achse x', welche unterhalb des Gehäuses verläuft, vor dem ersten Schaltelement angeordnet ist. Somit ist das zweite Schaltelement entlang der fiktiven Achse x' in Richtung der Werkzeugaufnahme vor dem ersten Schaltelement angeordnet, so dass das zweite Schaltelement je nach Griffposition mit dem Zeigefinger oder Mittelfinger betätigt werden kann und eine Einhandbedienung der Handwerkzeugmaschine möglich ist. Dabei ist es besonders vorteilhaft, wenn das zweite Schaltelement eine Form aufweist, die einer Kontur des Gehäuses derart folgt, dass das zweite Schaltelement beidseitig bedienbar ist.

In einer bevorzugten Ausführungsform weist das zweite Schaltelement mehrere Abschnitte auf, wobei vorteilhafterweise die Abschnitte an der Gehäuseaußenseite angeordnet und mit dem Schaltsteg im Inneren des Gehäuses verbunden sind und jeweils in unterschiedliche Richtungen aus dem Gehäuse herausragen. Vorteilhafterweise verläuft das zweite Schaltelement zumindest abschnittsweise innerhalb des Gehäuses.

In einer alternativen Ausführungsform weist das zweite Schaltelement wenigstens zwei Abschnitte auf, wobei die beiden Abschnitte im Wesentlichen parallel gegenüberliegend zueinander entlang der Drehachse x an der Gehäuseaußenseite angebracht sind. Diese Anordnung ermöglicht es, dass das zweite Schaltelement sowohl mit dem Zeigefinger oder Mittelfinger der haltenden Hand oder mit der anderen Hand des Benutzers betätigt werden kann.

Bevorzugterweise ist das erste Schaltelement ein manuell zu betätigender Druckschalter, wobei das zweite Schaltelement ein manuell zu betätigender Schiebeschalter sein kann.

Generell sollen unter einer Handwerkzeugmaschine beispielsweise Stabschrauber, Schlagbohrmaschinen, Multifunktionswerkzeuge, Bohrschrauber, Akku-Bohrer, Akku-Schrauber und/ oder Akku-Bohrschrauber verstanden werden. Wobei die Handwerkzeugmaschine ein Getriebe zur Übertragung eines von einem Antriebsmotor erzeugten Drehmomentes auf eine Antriebswelle aufweist und als Werkzeuge beispielsweise verschiedene Bohrer, Bitaufsätze oder Bohrkronen verwendet werden können.

Unter Übertragung elektrischer Energie soll in diesem Zusammenhang insbesondere verstanden werden, dass die Handwerkzeugmaschine über eine Stromkabelanbindung an den Korpus und/oder über einen Akku im Gehäuse Energie an den Antriebsmotor weiterleitet.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert. Die Zeichnungen zeigen:
- Fig. 1: eine schematische Seitenansicht einer erfindungsgemäßen Handwerkzeugmaschine mit einer ersten Ausführungsform des zweiten Schaltelementes;
- Fig. 2: eine schematische vergrößerte Seitenschnittansicht der Ausführungsform aus Fig. 1 des zweiten Schaltelementes mit einer Kulissenschaltung;
- Fig. 3: eine schematische vergrößerte Seitenschnittansicht der Ausführungsform aus Fig. 1 des zweiten Schaltelementes mit einem direkt Eingriff; und
- Fig. 4: eine schematische vergrößerte Seitenschnittansicht der Ausführungsform aus Fig. 1 des zweiten Schaltelementes mit einer Drehscheibe;
- Fig. 5: eine schematische vergrößerte Detailansicht der ersten Schaltereinheit mit einer Drehscheibe;
- Fig. 6: eine schematische vergrößerte Seitenschnittansicht einer erfindungsgemäßen Handwerkzeugmaschine mit einer zweiten Ausführungsform eines zweiten Schaltelementes;
- Fig. 7: eine schematische vergrößerte Detailansicht einer dritten Ausführungsform eines zweiten Schaltelementes;
- Fig. 8: eine schematische Seitenansicht einer erfindungsgemäßen Handwerkzeugmaschine mit einer vierten Ausführungsform des zweiten Schaltelementes;
- Fig. 9: eine schematische vergrößerte Detailansicht der vierten Ausführungsform des zweiten Schaltelementes;
- Fig. 10: eine schematische Seitenansicht einer erfindungsgemäßen Handwerkzeugmaschine mit einer fünften Ausführungsform des zweiten Schaltelementes;
- Fig. 11: eine schematische vergrößerte Detailansicht der fünften Ausführungsform des zweiten Schaltelementes; und
- Fig. 12: eine schematische Seitenansicht einer erfindungsgemäßen Handwerkzeugmaschine mit einer sechsten Ausführungsform des zweiten Schaltelementes.

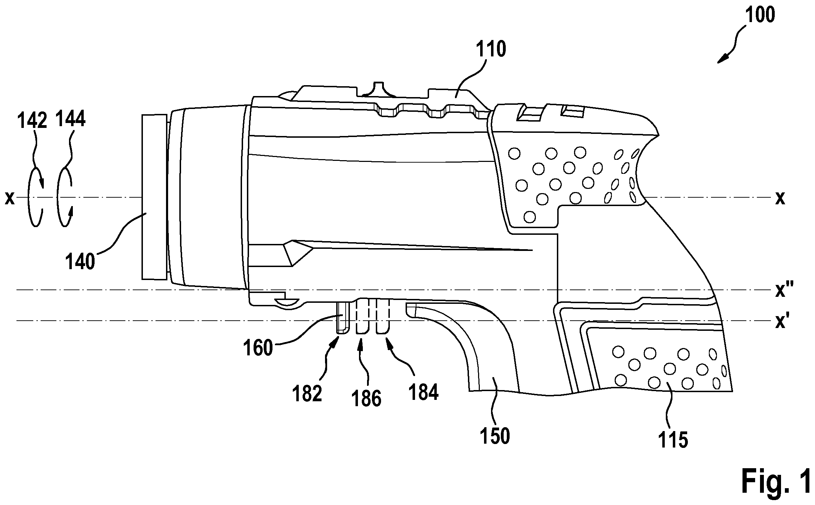

Figur 1 zeigt eine schematische Explosionsansicht einer Ausführungsform einer erfindungsgemäßen Handwerkzeugmaschine 100, die ein Gehäuse 110 mit einem Handgriff 115 aufweist, welcher am Gehäuse 110 angeordnet ist. Gemäß der dargestellten Ausführungsform ist die Handwerkzeugmaschine 100 sowohl mit einer netzabhängigen Stromversorgung als auch mit einer netzunabhängigen Stromversorgung verwendbar, wobei die Handwerkzeugmaschine 100 zur netzunabhängigen Stromversorgung mechanisch und elektrisch mit einem Energiespeicher, bei dem es sich insbesondere um eine Art von Akku für die Spannungsversorgung des Antriebsmotors handelt, verbindbar ist, welcher im Gehäuse 110, insbesondere im Bereich des Handgriffes 115 angeordnet ist. Ferner sind im Gehäuse 110 ein mit Strom versorgter, elektrischer Antriebsmotor und ein Getriebe 120 angeordnet. Der Antriebsmotor ist über das Getriebe 120 und eine Antriebswelle mit einer Werkzeugaufnahme 140 für ein nicht dargestelltes Werkzeug, beispielsweise einen Bohrer oder einen Bitaufsatz, verbunden.

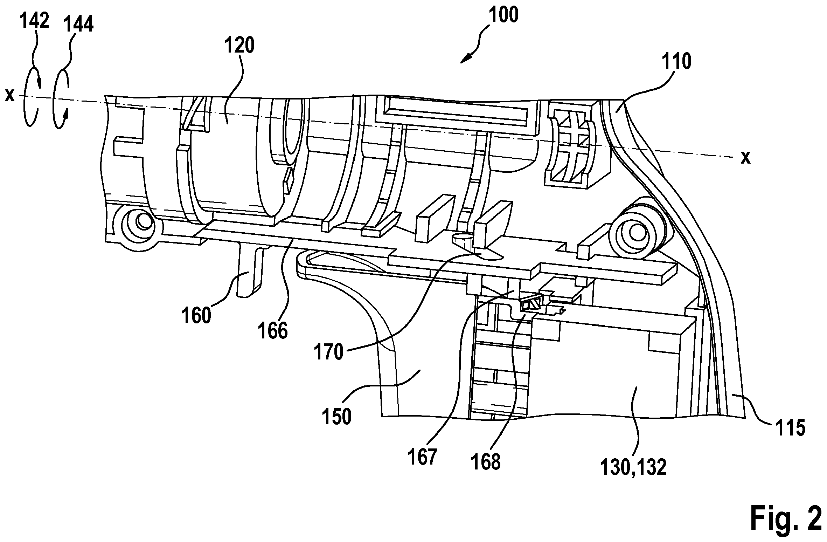

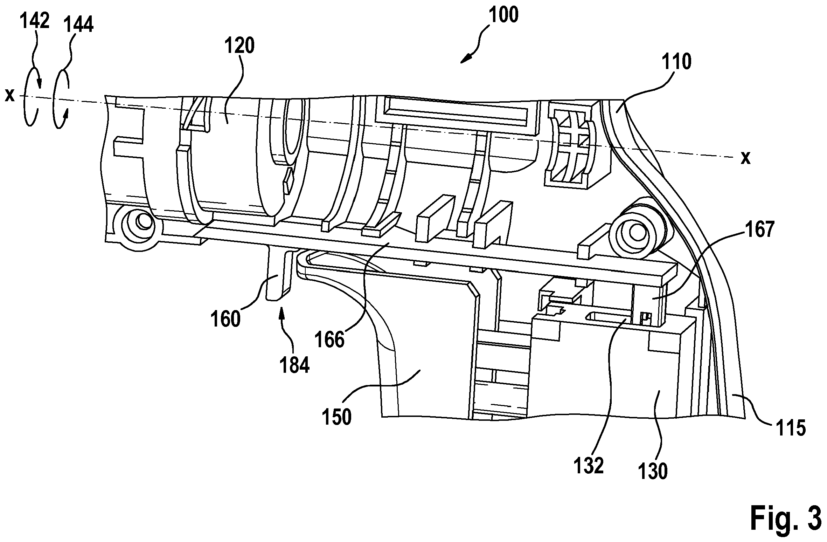

Die Handwerkzeugmaschine 100 weist ein erstes Schaltelement 150 zum Betätigen einer ersten Schaltereinheit 130 (siehe Fig. 2, 3) für die Energieversorgung des Antriebsmotors auf. Das erste Schaltelement 150 ist vom Benutzer durch eine Druckbewegung manuell betätigbar, um so die Spannungsversorgung für den Antriebsmotor ein- und/oder auszuschalten. Das erste Schaltelement 150 wirkt bei seiner Bewegung direkt und/oder indirekt betätigend auf die erste Schaltereinheit 130 ein.

Bei der in den Figuren lediglich schematisch angedeuteten ersten Schaltereinheit 130 handelt es sich um einen in herkömmlicher Art und Weise ausgebildeten elektrischen Schalter mit einem elektromechanischen Kontaktsystem. Das erste Schaltelement 150 wirkt in bekannter Art und Weise über ein nicht im Einzelnen dargestelltes Verbindungsmittel, das beweglich in das Innere des Gehäuses 110 hineinführt, auf die erste Schaltereinheit 130 ein. Entsprechend kann es sich bei dem ersten Schaltelement 150 auch um einen Sensordruckschalter mit einem Sensor, wie einen Kraftsensor, einen Hallsensor, einen magnetoresistiven Sensor, einen kapazitiven Drucksensor o. dgl. handeln.

Ein sowohl mit dem ersten Schaltelement 150 als auch mit der ersten Schaltereinheit 130 in Wirkverbindung bringbares Verbindungsmittel 167 überträgt die Bewegung des ersten Schaltelementes 150 auf die erste Schaltereinheit 130.

Wie anhand von Fig. 1 zu erkennen ist, ragt das erste Schaltelement 150 aus dem Gehäuse 110 des Handgriffes 115 für den Benutzer manuell zugänglich heraus, so dass in einer an sich bekannten Art und Weise mit Hilfe der ersten Schaltereinheit 130 eine Steuerung und/oder Regelung des Antriebsmotors bevorzugterweise in Abhängigkeit vom Verstellweg des ersten Schaltelementes 150 ermöglicht werden kann. Beispielsweise kann der Benutzer durch entsprechende manuelle Verstellung des ersten Schaltelementes 150 die Drehzahl, das Drehmoment o. dgl. des Antriebsmotors in der Art einer "Gas-Gebe"-Funktion einstellen.

Ferner weist die Handwerkzeugmaschine 100 ein zweites Schaltelement 160 in Form eines Schiebeschalters zum Einstellen der Drehrichtung des Antriebsmotors der Handwerkzeugmaschine 100 auf. Das zweite Schaltelement 160 ist entlang einer Drehachse x der Antriebswelle, insbesondere der Werkzeugaufnahme 140 der Handwerkzeugmaschine 100, verschieblich angeordnet, so dass das zweite Schaltelement 160 bei Betätigung eine Linearbewegung im wesentlichen parallel zu der Drehachse x ausführt und in der dargestellten Ausführungsform zwischen einer ersten Position 182, einer zweiten Position 186 und einer dritten Position 184 hin und her bewegt werden kann. Dabei legen jeweils die erste und zweite Position eine Drehrichtung des Antriebsmotors fest. So ist die erste Position 182 einer ersten Drehrichtung des Antriebsmotors und die zweite Position 184 einer zweiten Drehrichtung des Antriebsmotors zugeordnet, wobei wiederum die erste Drehrichtung des Antriebsmotors einer ersten Drehrichtung 142 der Werkzeugaufnahme 140 und eine zweite Drehrichtung 144 des Antriebsmotors einer zweiten Drehrichtung der Werkzeugaufnahme 140 zugeordnet. Die erste Position 182 liegt gegenüber der zweiten Position 184 näher an der Werkzeugaufnahme 140, wobei die erste Drehrichtung 142 der Werkzeugaufnahme 140 eine Rechtsdrehung und damit ein Eindrehen beispielsweise einer Schraube bewirkt. Demgegenüber liegt die zweite Position 184 gegenüber der ersten Position 182 weiter entfernt von der Werkzeugaufnahme 140 und bewirkt eine Linksdrehung der Werkzeugaufnahme 140 und damit ein Ausdrehen einer Schraube.

Somit kann der Benutzer der Handwerkzeugmaschine bereits anhand der Positionen 182, 184 des zweiten Schaltelements 160 erkennen, in welchem Arbeitsmodus die Handwerkzeugmaschine 100 arbeitet.

Ferner kann das zweite Schaltelement 160 zum Beispiel einen Schaltkontakt für die Spannungsversorgung des Antriebsmotors besitzen, um den Antriebsmotor von der Spannungsversorgung zu trennen, wenn die Handwerkzeugmaschine 100 nicht benutzt wird.

Zusätzlich weist das zweite Schaltelement 160 zwischen der ersten Position 182 und der zweiten Position 184 ein dritte Position 186, eine Mittelstellung, auf, wobei in der dritten Position 186 eine elektrische, elektromechanische und/ oder mechanische Unterbrechung des Motorstroms erfolgt. So kann zum Beispiel die Bedienung der ersten Schaltereinheit 130 über das erste Schaltelement 150 mechanisch gesperrt sein, wobei das zweite Schaltelement 160 bei Bewegung in eine dritte Position 186 verriegelnd auf das erste Schaltelement 150 wirkt. Alternativ kann die Sperrung des ersten Schaltelementes 150 und/oder der ersten Schaltereinheit 130 und damit die Unterbrechung des Motorstroms in der dritten Position 186 des zweiten Schalterelements 160 elektrisch und/oder elektromechanisch, beispielsweise durch die Abgabe eines Signals an eine elektronische Einheit der Handwerkzeugmaschine, insbesondere an die erste Schaltereinheit 130 erfolgen.

Wie in den Figuren 2, 3, und 4 sowie 6 bis 12 dargestellt, gibt es verschiedene Möglichkeiten, eine erfindungsgemäße Linearbewegung des zweiten Schaltelementes 160 umzusetzen. Eine Variante ist in Figur 2 dargestellt, wobei das zweite Schaltelement 160 einen Drehrichtungsschalter 132 betätigt. Der Drehrichtungsschalter 132 ist in der dargestellten Ausführungsform direkt in die erste Schaltereinheit 130 integriert. Das zweite Schaltelement 160 ist an der Außenseite des Gehäuses 110 angebracht und mit einem Schaltsteg 166, der im Inneren des Gehäuses 110 liegt, verbunden. Der Schaltsteg 166 steht mit dem Drehrichtungsschalter 132 über ein Verbindungselement 166 in Eingriff und kann im Wesentlichen parallel zur Drehachse x bewegt werden. Ferner weist diese Schalteranordnung eine Schalterwippe 168 auf, welche quer zur Drehachse x bewegbar ist. Die Umwandlung der Längsbewegung des Schaltsteges 166 in die Querbewegung der Schalterwippe 168 erfolgt über eine Kulissenschaltung 170.

Eine alternative Variante ist in Figur 3 dargestellt. Im Gegensatz zu der in Figur 2 beschriebenen ersten Variante ist der Schaltsteg 166 direkt mit dem Drehrichtungsschalter 132 über das Verbindungselement 167 verbunden, so dass das Verbindungselement 167 im wesentlichen parallel zur Drehachse x bewegt werden kann. Diese Schalteranordnung weist weder eine Schalterwippe noch eine Kulissenschaltung auf.

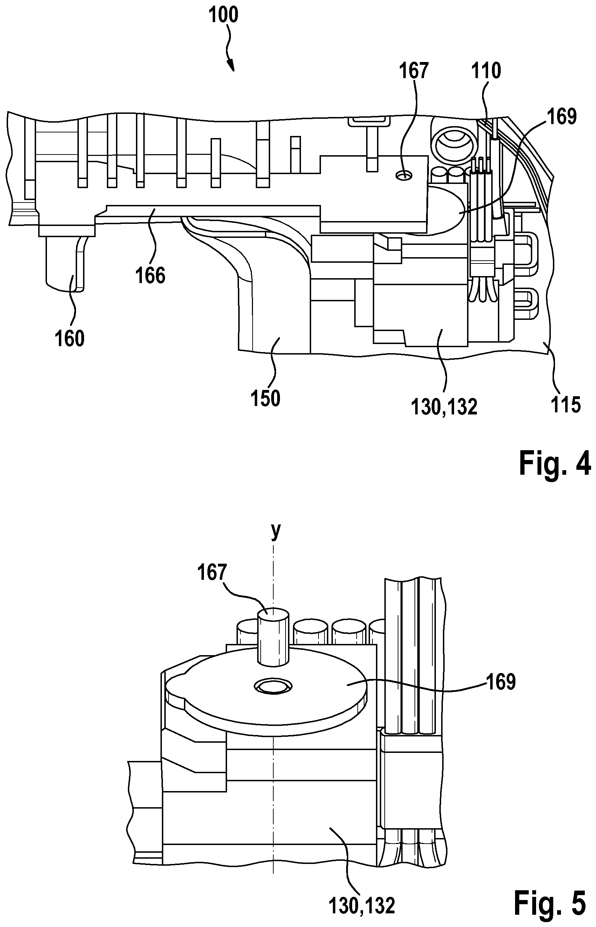

In einer weiteren, in den Figuren 4 und 5 dargestellten Ausführungsform, steht der Schaltsteg 166 über das Verbindungselement 166 und über eine Drehscheibe 169 mit dem Drehrichtungsschalter 132 in Eingriff. Der Schaltsteg 166 kann somit weitestgehend im Wesentlichen parallel zur Drehachse x bewegt werden. Das Verbindungselement 167 ist drehbar mit dem Schaltsteg 166 verbunden, so dass eine entlang der Drehachse x vollzogenen Bewegung über eine Drehbewegung der Drehscheibe 169 und den Drehrichtungsschalter 132 an die erste Schaltereinheit 130 übertragen wird.

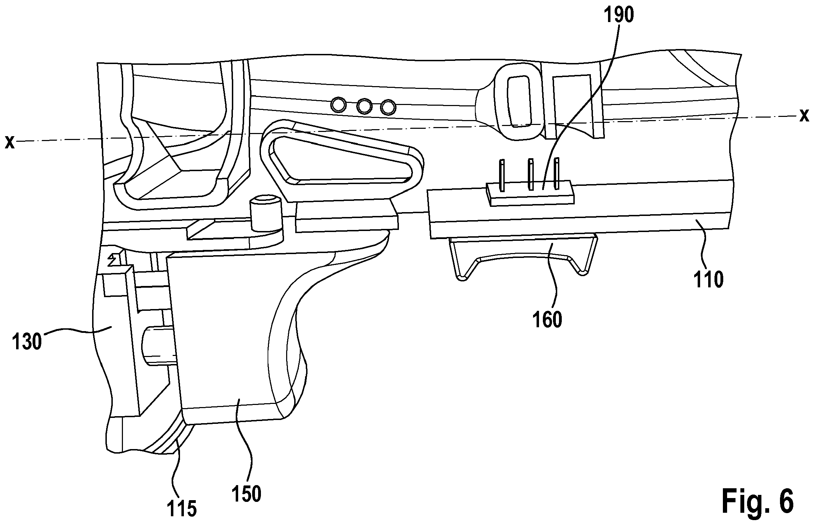

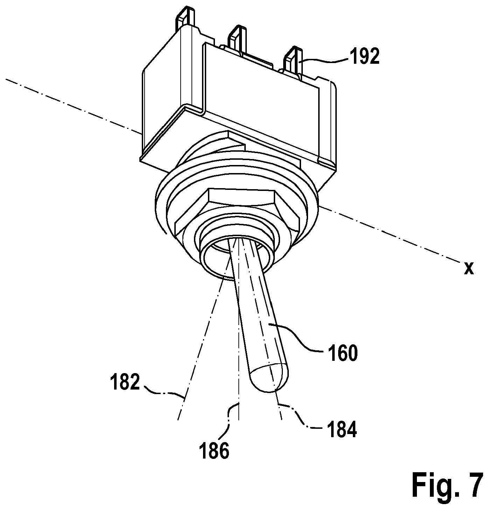

Wie in den Figuren 6 und 7 dargestellt, kann das zweite Schaltelement 160 alternativ auch eine zweite Schaltereinheit 190 bedienen, welche die Position 182, 184, 186 des zweiten Schaltelementes 160 elektronisch über Kontaktelemente 192 an die erste Schaltereinheit 130 übermittelt. Dabei kann das zweite Schaltelement 160 als Schiebeschalter oder wie in Figur 7 dargestellt als Kippschalter ausgeführt sein.

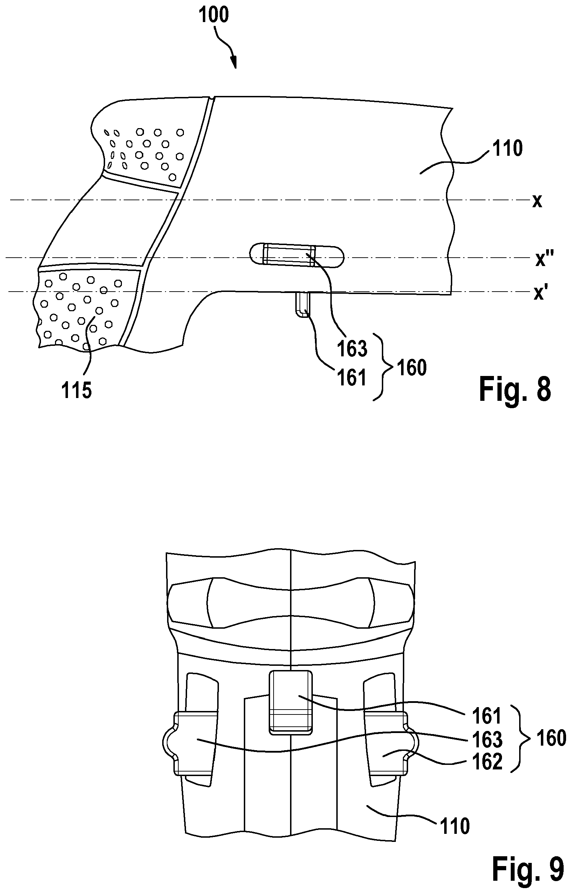

In den Figuren 8 und 9 ist eine vierte Ausführungsform des zweiten Schaltelementes 160 dargestellt. Dabei ist das zweite Schaltelement 160 entlang der Drehachse x in Richtung der Werkzeugaufnahme 140 vor dem ersten Schaltelement 150 in einem Bereich unterhalb der Drehachse x angeordnet und ragt an der Unterseite aus dem Gehäuse 110 heraus. Dabei sind das erste Schaltelement 150 und das zweite Schaltelement 160 entlang einer gemeinsamen, zur Drehachse x im Wesentlichen parallelen Achse x', welche unterhalb des Gehäuses 110 verläuft, hintereinander angeordnet. Entlang der fiktiven Achse x' ist das zweite Schaltelement 160 in Richtung der Werkzeugaufnahme 140 vor dem ersten Schaltelement 150 in Form eines Schiebeschalters im Wesentlichen quer zur Längserstreckung des Handgriffs 115 und quer zur Achse x verschiebbar angeordnet. In dieser Ausführungsform ragt ein erster Abschnitt 161 des zweiten Schaltelementes 160 nach unten aus dem Gehäuse 110 heraus, ferner weist das zweite Schaltelement 160 einen zweiten Abschnitt 162 und einen dritten Abschnitt 163 auf, die beidseitig aus dem Gehäuse 110 herausragen. Auf diese Weise kann der Benutzer der Handwerkzeugmaschine 100 das zweite Schaltelement 160 sowohl über den seitlich aus dem Gehäuse 110 herausragenden ersten Abschnitt 162 und den seitlich aus dem Gehäuse 110 herausragenden dritten Abschnitt 163 als auch über den unter dem Gehäuse 110 herausragenden ersten Abschnitt 161 des zweiten Schaltelementes 160 bedienen. Das zweite Schaltelement 160 kann somit einfach und komfortabel mit dem Daumen, dem Zeigefinger oder einem anderen Finger bedient werden, so dass es unerheblich ist, ob es sich bei dem Bediener um einen Rechtshänder oder Linkshänder handelt.

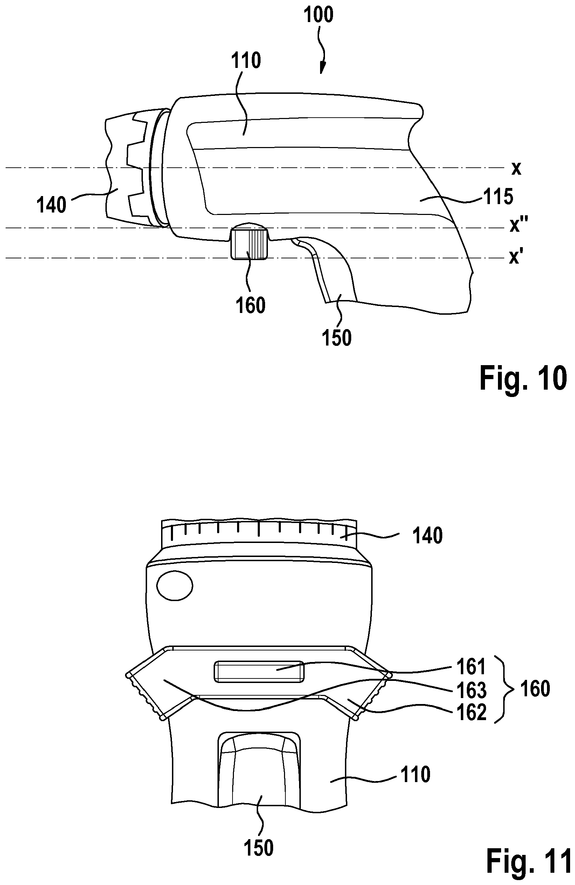

Grundsätzlich kann das zweite Schaltelement 160 einstückig ausgebildet sein. Alternativ ist aber auch eine mehrstückige Ausgestaltung wie in den Figuren 10 und 11 dargestellt denkbar, wobei in der fünften Ausführungsform des zweiten Schaltelementes 160, die in den Figuren 10 und 11 dargestellt ist, die Abschnitte 163, 162 einstückig ausgeformt sind und auf den ersten Abschnitt 161 aufgesteckt werden können. Im Gegensatz zu der in den Figuren 8 und 9 dargestellten Ausführungsform verlaufen die Abschnitte 162, 163 des zweiten Schaltelementes 160 unterhalb des Gehäuses 110 und ragen nicht durch das Gehäuse 110 hindurch. Dabei weist das zweite Schaltelement 160 eine Form auf, die einer Kontur des Gehäuses 110 derart folgt, dass das zweite Schaltelement beidseitig bedienbar ist. Durch die mehrstückige Ausführungsform kann das zweite Schaltelement 160 variabel umgestaltet werden, so dass es für den Bediener möglich ist, selbständig zu entscheiden, ob er die seitlichen Abschnitte 162, 163 montiert haben möchte. Allerdings ist grundsätzlich sowohl eine einstückige als auch eine mehrstückige Ausgestaltung des zweiten Schaltelementes 160 möglich.

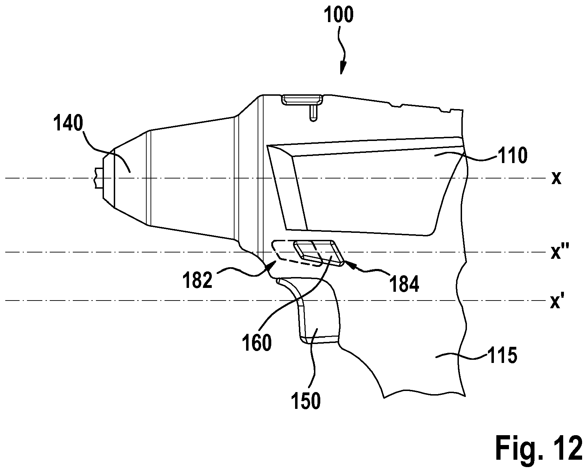

Bei der in Figur 12 dargestellten sechsten Ausführungsform des zweiten Schaltelementes 160 ist das zweite Schaltelement 160 oberhalb des ersten Schaltelementes 150 angeordnet. Dabei ist das zweite Schaltelement 160 entlang einer zur Drehachse x im Wesentlichen parallelen Achse x" verschieblich angeordnet, so dass das zweite Schaltelement 160 bei Betätigung eine Linearbewegung im Wesentlichen parallel zu der Drehachse x ausführt und in der dargestellten Ausführungsform zwischen einer ersten Position 182, einer zweiten Position und einer dritten Position 184 hin und her bewegt werden kann. Die Achse x" verläuft unterhalb der Drehachse x im unteren Bereich des Gehäuses 110 und über der fiktiven Achse x'. Die Drehachse x und die fiktive Achse x" verlaufen dabei parallel, aber versetzt zueinander. In dieser Ausführungsform ist das zweite Schaltelement 160 vollständig in dem unteren Bereich des Gehäuses 110 integriert angeordnet und ragt seitlich aus dem Gehäuse 110 heraus.

Wesentlich ist, dass bei allen Varianten das zweite Schaltelement 160 bei Betätigung eine Linearbewegung im Wesentlichen parallel zur Drehachse x ausführt. Wesentlich ist ferner, dass bei allen Varianten das zweite Schaltelement 160 entlang der Drehachse x vor dem ersten Schaltelement 150 angeordnet, so dass es möglich ist, das zweite Schaltelement 160 je nach Griffposition mit dem Zeigefinger oder Mittelfinger zu betätigen. Das zweite Schaltelement 160 ist entlang der Drehachse x in Richtung Werkzeugaufnahme 140 vor dem ersten Schaltelement 150 angeordnet. Dabei ist der Abstand zwischen dem ersten Schaltelement 150 und dem zweiten Schaltelement 160 so gewählt, dass eine Einhandbedienung der Handwerkzeugmaschine 100 möglich ist. Insbesondere erlaubt die Anordnung des zweiten Schaltelements 160 relativ zu dem ersten Schaltelement 150 eine Einhandbedienung beider Schaltelemente 150, 160. Das zweite Schaltelement 160 ist ferner in einem Bereich unterhalb der Drehachse x angeordnet. In der dargestellten Ausführungsform, zum Beispiel nach Fig. 1, 6 und 8 bis 11, ist das zweite Schaltelement 160 an der Unterseite des Gehäuses 110 angeordnet. Dabei sind das erste Schaltelement 150 und das zweite Schaltelement 160 entlang der gemeinsamen, zur Drehachse x im Wesentlichen parallelen Achse x', welche unterhalb des Gehäuses 110 verläuft, hintereinander angeordnet. Entlang der fiktiven Achse x' ist das zweite Schaltelement 160 in Richtung der Werkzeugaufnahme 140 vor dem ersten Schaltelement 150 angeordnet. In dieser Ausführungsform ragt das erste Schaltelement 160 nach unten aus dem Gehäuse 110 heraus.

In einer alternativen, nicht dargestellten Ausführungsform ist das zweite Schaltelement 160 in Richtung der Werkzeugaufnahme 140 vor dem ersten Schaltelement 150 und oberhalb des ersten Schaltelements 150 angeordnet. Dabei ist das zweite Schaltelement 160 entlang der zur Drehachse x im Wesentlichen parallelen Achse x" angeordnet, welche unterhalb der Drehachse x im unteren Bereich des Gehäuses 110 und über der fiktiven Achse x' verläuft. Die fiktiven Achsen x' und x" verlaufen dabei parallel, aber versetzt zueinander. In dieser Ausführungsform ragt das zweite Schaltelement 160 im unteren Bereich des Gehäuses 110 seitlich aus dem Gehäuse 110 heraus.

In einer weiteren nicht dargestellten alternativen Ausführungsform ist das zweite Schaltelement 160 in wenigstens zwei Betätigungselemente aufgeteilt, wobei vorteilhafterweise die Betätigungselemente im wesentlichen parallel gegenüberliegend zueinander entlang der Drehachse x an der Außenseite des Gehäuses 110 angebracht sind, so dass eine Bedienung des zweiten Schaltelementes 160 sowohl mit dem Zeigefinger oder Mittelfinger der rechten und der linken Hand erfolgen kann. Die zwei Betätigungselemente sind dabei insbesondere zusammenhängend ausgeführt.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die Erfindung, insbesondere die beschriebene Schalteranordnung, nicht nur bei Akku-Elektrowerkzeugen sondern auch bei sonstigen Elektrogeräten, die mit einem insbesondere wechselbar ausgestalteten Energiespeicher versehen sind, wie Elektrohaushaltsgeräten, Elektrogartengeräten, Werkzeugmaschinen o. dgl., in vielfältiger Art und Weise Verwendung finden.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Handwerkzeugmaschine (100) umfassend ein Gehäuse (110) mit einem Handgriff (115), ein in dem Gehäuse (110) angeordnetes Getriebe (120) zur Übertragung eines von einem Antriebsmotor erzeugten Drehmomentes auf eine um eine Drehachse (x) rotierende Werkzeugaufnahme (140), sowie eine in dem Gehäuse (110) angeordnete erste Schaltereinheit (130) zur Steuerung des Antriebsmotors mit einem ersten Schaltelement (150) und einem zweiten Schaltelement (160) zur Bedienung der Schaltereinheit (130), wobei über das erste Schaltelement (150) und zweite Schaltelement (160) Steuergrößen des Antriebsmotor von einem Bediener beeinflusst werden, wobei über das zweite Schaltelement (160) die Drehrichtung des Antriebsmotors regelbar ist, und wobei das zweite Schaltelement (160) bei Betätigung eine Linearbewegung im Wesentlichen parallel zur Drehachse (x) ausführt, **dadurch gekennzeichnet, dass** das zweite Schaltelement (160) entlang der Drehachse (x) in Richtung Werkzeugaufnahme (140) vor dem ersten Schaltelement (150) und in einem Bereich unterhalb der Drehachse (x) angeordnet ist, wobei das zweite Schaltelement (160) an der Unterseite des Gehäuses (110) angeordnet ist.

2. Handwerkzeugmaschine (100) nach Anspruch 1, wobei das erste Schaltelement (160) nach unten aus dem Gehäuse (110) heraus ragt.

3. Handwerkzeugmaschine (100) nach einem der Ansprüche 1 bis 2, wobei das zweite Schaltelement (160) in wenigstens zwei Positionen einrastet, wobei eine erste Position (182) einer ersten Drehrichtung des Antriebsmotors entspricht, wobei die erste Drehrichtung des Antriebsmotors einer ersten Schraubrichtung (142) der Werkzeugaufnahme (140) zugeordnet ist und wobei eine zweite Position (184) einer zweiten Drehrichtung des Antriebsmotors entspricht, wobei die zweite Drehrichtung des Antriebsmotors einer zweiten Schraubrichtung (144) der Werkzeugaufnahme (140) zugeordnet ist.

4. Handwerkzeugmaschine (100) nach Anspruch 3, wobei die erste Position (182) gegenüber der zweiten Position (184) näher an der Werkzeugaufnahme (140) liegt und die erste Schraubrichtung (142) eine Rechtsdrehung der Werkzeugaufnahme (140) bewirkt und wobei die zweite Position (184) gegenüber der ersten Position (182) weiter entfernt von der Werkzeugaufnahme (140) liegt und die zweite Schraubrichtung (144) eine Linksdrehung der Werkzeugaufnahme (140) bewirkt.

5. Handwerkzeugmaschine (100) nach einem der Ansprüche 1 bis 4, wobei das zweite Schaltelement (160) in einer dritten Position (186) einrastet, wobei in der dritten Position (186) eine elektrische, elektromechanische und/ oder mechanische Unterbrechung des Motorstroms erfolgt.

6. Handwerkzeugmaschine (100) nach einem der Ansprüche 1 bis 5, wobei das zweite Schaltelement (160) einen Drehrichtungsschalter (132) der ersten Schaltereinheit (130) betätigt.

7. Handwerkzeugmaschine (100) nach einem der Ansprüche 1 bis 6, wobei das zweite Schaltelement (160) an der Gehäuseaußenseite angebracht ist und mit einem Schaltsteg (166) im Inneren des Gehäuses (110) verbunden ist, wobei der Schaltsteg (166) mit dem Drehrichtungsschalter (132) in Eingriff steht und im Wesentlichen parallel zur Drehachse (x) bewegt werden kann.

8. Handwerkzeugmaschine (100) nach Anspruch 7, wobei der Eingriff über ein Verbindungselement (167) erfolgt, welches im Wesentlichen parallel zur Drehachse (x) bewegbar ist.

9. Handwerkzeugmaschine (100) nach Anspruch 7 oder 8, wobei der Eingriff über eine Drehscheibe (16) erfolgt, die um eine Achse (y) drehbar angeordnet ist.

10. Handwerkzeugmaschine (100) nach Anspruch 7 oder 8, wobei der Eingriff über eine Schalterwippe (168) erfolgt, die im Wesentlichen quer zur Drehachse (x) bewegbar ist.

11. Handwerkzeugmaschine (100) nach Anspruch 10, wobei die Umwandlung der Längsbewegung des Schaltsteges (166) in die Querbewegung der Schalterwippe (168) über eine Kulissenschaltung (170) erfolgt.

12. Handwerkzeugmaschine (100) nach einem der Ansprüche 1 bis 11, wobei das zweite Schaltelement (160) eine zweite Schaltereinheit (190) bedient, welche die Position des zweiten Schaltelementes (160) elektronisch an die erste Schaltereinheit (130) übermittelt, wobei die Position des zweiten Schaltelements (160) von einem Sensor, insbesondere einem induktiv, kapazitiv, magnetisch und/oder optisch arbeitenden Sensor erfassbar ist.

13. Handwerkzeugmaschine (100) nach Anspruch 1 bis 12, wobei das zweite Schaltelement (160) mehrere Abschnitte (161, 162, 163) aufweist, wobei die Abschnitte (161, 162, 163) an der Gehäuseaußenseite angeordnet und mit einem Schaltsteg (166) im Inneren des Gehäuses (110) verbunden sind und jeweils in unterschiedliche Richtungen aus dem Gehäuse (110) herausragen.

14. Handwerkzeugmaschine (100) nach einem der Ansprüche 1 bis 13, wobei das zweite Schaltelement (160) wenigstens zwei Abschnitte (162, 163) aufweist, wobei die beiden Abschnitte (162, 163) im Wesentlichen parallel gegenüberliegend zueinander entlang einer Drehachse (x) an der Außenseite des Gehäuses (110) angeordnet sind.

15. Handwerkzeugmaschine (100) nach einem der Ansprüche 1 bis 14, wobei das zweite Schaltelement (160) eine Form aufweist, die einer Kontur des Gehäuses (110) derart folgt, dass das zweite Schaltelement beidseitig bedienbar ist.

16. Handwerkzeugmaschine (100) nach einem der Ansprüche 1 bis 15, wobei das zweite Schaltelement (160) zumindest abschnittsweise innerhalb des Gehäuses (110) verläuft.

17. Handwerkzeugmaschine (100) nach einem der vorhergehenden Ansprüche, wobei die Handwerkzeugmaschine (100) ein Stabschrauber, eine Schlagbohrmaschinen, ein Multifunktionswerkzeug, ein Bohrschrauber, ein Akku-Bohrer, ein Akku-Schrauber und/ oder ein Akku-Bohrschrauber mit einem Getriebe (120) zur Übertragung eines von dem Antriebsmotor erzeugten Drehmomentes auf eine Antriebswelle ist.

## Claims

1. Hand-held power tool (100), comprising a housing (110) having a handle (115), a transmission (120), arranged in the housing (110), for transmitting a torque, which is generated by a drive motor, to a tool receiver (140) that rotates about a rotation axis (x), and a first switch unit (130), for controlling the drive motor, which is arranged in the housing (110) and has a first switching element (150) and a second switching element (160) for operating the switch unit (130), control variables of the drive motor being influenced by an operator, by means of the first switching element (150) and the second switching element (160), the direction of rotation of the drive motor being controllable by means of the second switching element (160), and the second switching element (160), upon actuation, executing a linear movement that is substantially parallel to the rotation axis (x), **characterized in that** the second switching element (160) is arranged in front of the first switching element (150) along the rotation axis (x) in the direction of the tool receiver (140) and in a region below the rotation axis (x), wherein the second switching element (160) is arranged on the underside of the housing (110).

2. Hand-held power tool (100) according to Claim 1, wherein the first switching element (160) projects downwards out of the housing (110).

3. Hand-held power tool (100) according to either of Claims 1 to 2, the second switching element (160) engaging in at least two positions, a first position (182) corresponding to a first direction of rotation of the drive motor, the first direction of rotation of the drive motor being assigned to a first screwing direction (142) of the tool receiver (140), and a second position (184) corresponding to a second direction of rotation of the drive motor, the second direction of rotation of the drive motor corresponding to a second screwing direction (144) of the tool receiver (140).

4. Hand-held power tool (100) according to Claim 3, the first position (182) being closer than the second position (184) to the tool receiver (140), and the first screwing direction (142) effecting a clockwise rotation of the tool receiver (140), and the second position (184) being farther than the first position (182) from the tool receiver (140), and the second screwing direction (144) effecting an anticlockwise rotation of the tool receiver (140).

5. Hand-held power tool (100) according to any one of Claims 1 to 4, the second switching element (160) engaging in a third position (186), an electrical, electromechanical and/or mechanical interruption of the motor current being effected in the third position (186).

6. Hand-held power tool (100) according to any one of Claims 1 to 5, the second switching element (160) actuating a direction of rotation switch (132) of the first switch unit (130).

7. Hand-held power tool (100) according to any one of Claims 1 to 6, the second switching element (160) being mounted on the outside of the housing and connected to a switching web (166) inside the housing (110), the switching web (166) being in engagement with the direction of rotation switch (132) and being movable substantially parallelwise in relation to the rotation axis (x).

8. Hand-held power tool (100) according to Claim 7, the engagement being effected by means of a connecting element (167) that can be moved substantially parallelwise in relation to the rotation axis (x).

9. Hand-held power tool (100) according to Claim 7 or 8, the engagement being effected by means of a rotary disk (16), which is arranged so as to be rotatable about an axis (y).

10. Hand-held power tool (100) according to Claim 7 or 8, the engagement being effected by means of a switch rocker (168), which can be moved substantially transversely in relation to the rotation axis (x).

11. Hand-held power tool (100) according to Claim 10, the conversion of the longitudinal movement of the switching web (166) into the transverse movement of the switch rocker (168) being effected by means of a gate shift (170).

12. Hand-held power tool (100) according to any one of Claims 1 to 11, the second switching element (160) operating a second switch unit (190) that electronically transmits the position of the second switching element (160) to the first switch unit (130), the position of the second switching element (160) being able to be sensed by a sensor, in particular a sensor that operates inductively, capacitively, magnetically and/or optically.

13. Hand-held power tool (100) according to Claim 1 to 12, the second switching element (160) having a plurality of portions (161, 162, 163), the portions (161, 162, 163) being arranged on the outside of the housing and connected to a switching web (166) inside the housing (110), and each projecting in differing directions out of the housing (110).

14. Hand-held power tool (100) according to any one of Claims 1 to 13, the second switching element (160) having at least two portions (162, 163), the two portions (162, 163) being mounted on the outside of the housing (110), substantially parallel and opposite in relation to each other along a rotation axis (x).

15. Hand-held power tool (100) according to any one of Claims 1 to 14, the second switching element (160) being of a shape that follows a contour of the housing (110) in such a manner that the second switching element can be operated on both sides.

16. Hand-held power tool (100) according to any one of Claims 1 to 15, the second switching element (160) extending, at least portionally, inside the housing (110).

17. Hand-held power tool (100) according to any one of the preceding claims, the hand-held power tool (100) being a baton screwdriver, a percussion power drill, a multifunction tool, a drill/driver, a cordless drill, a cordless screwdriver and/or a cordless drill/driver, having a transmission (120) for transmitting a torque, which is generated by the drive motor, to a drive shaft.

## Revendications

1. Machine-outil à main (100) comprenant un boîtier (110) muni d'une poignée (115), d'une transmission (120) disposée dans le boîtier (110) pour transmettre un couple de rotation produit par un moteur d'entraînement à un raccord d'outils (140) en rotation autour d'un axe de rotation (x), ainsi qu'une première unité de commutation (130) disposée dans le boîtier (110) pour commander le moteur d'entraînement au moyen d'un premier élément de commutation (150) et d'un deuxième élément de commutation (160) permettant de commander l'unité de commutation (130), dans lequel des grandeurs de commande du moteur d'entraînement sont influencées par un utilisateur par l'intermédiaire du premier élément de commutation (150) et du deuxième élément de commutation (160), dans lequel le sens de rotation du moteur d'entraînement peut être régulé par l'intermédiaire du deuxième élément de commutation (160), et dans lequel le deuxième élément de commutation (160) effectue un mouvement linéaire sensiblement parallèlement à l'axe de rotation (x) lors de son actionnement, **caractérisée en ce que** le deuxième élément de commutation (160) est disposé le long de l'axe de rotation (x) en amont du premier élément de commutation (150) dans la direction du raccord d'outils (140) et dans une zone située en dessous de l'axe de rotation (x), dans lequel le deuxième élément de commutation (160) est disposé sur la face inférieure du boîtier (110).

2. Machine-outil à main (100) selon la revendication 1, dans laquelle le premier élément de commutation (160) fait saillie vers le bas hors du boîtier (110).

3. Machine-outil à main (100) selon l'une quelconque des revendications 1 à 2, dans laquelle le deuxième élément de commutation (160) s'enclenche dans au moins deux positions, dans laquelle une première position (182) correspond à un premier sens de rotation du moteur d'entraînement, dans laquelle le premier sens de rotation du moteur d'entraînement est associé à un premier sens de vissage (142) du raccord d'outils (140) et dans laquelle deuxième position (184) correspond à un deuxième sens de rotation du moteur d'entraînement, dans laquelle le deuxième sens de rotation du moteur d'entraînement est associé à un deuxième sens de vissage (144) du raccord d'outils (140).

4. Machine-outil à main (100) selon la revendication 3, dans laquelle la première position (182) se situe plus près du raccord d'outils (140) par rapport à la deuxième position (184) et le premier sens de vissage (142) produit une rotation vers la droite du raccord d'outils (140) et dans laquelle la deuxième position (184) est plus éloignée du raccord d'outils (140) par rapport à la première position (182) et le deuxième sens de vissage (144) provoque une rotation vers la gauche du raccord d'outils (140).

5. Machine-outil à main (100) selon l'une quelconque des revendications 1 à 4, dans laquelle le deuxième élément de commutation (160) s'enclenche à une troisième position (186), dans laquelle une interruption électrique, électromécanique et/ou mécanique du courant de moteur est effectuée à la troisième position (186).

6. Machine-outil à main (100) selon l'une quelconque des revendications 1 à 5, dans laquelle le deuxième élément de commutation (160) actionne un commutateur de sens de rotation (132) de la première unité de commutation (130).

7. Machine-outil à main (100) selon l'une quelconque des revendications 1 à 6, dans laquelle le deuxième élément de commutation (160) est monté sur la face extérieure du boîtier et est relié à une tige de commutation (166) à l'intérieur du boîtier (110), dans laquelle la tige de commutation (166) est engagée sur le commutateur de sens de rotation (132) et peut-être déplacée sensiblement parallèlement à l'axe de rotation (x).

8. Machine-outil à main (100) selon la revendication 7, dans laquelle l'engagement est effectué par l'intermédiaire d'un élément de liaison (167) qui peut être déplacé sensiblement parallèlement à l'axe de rotation (x).

9. Machine-outil à main (100) selon la revendication 7 ou 8, dans laquelle l'engagement est effectué par l'intermédiaire d'un disque tournant (16) qui est disposé de manière à pouvoir tourner autour d'un axe (y).

10. Machine-outil à main (100) selon la revendication 7 ou 8, dans laquelle l'engagement est effectué par l'intermédiaire d'un interrupteur à bascule (168) qui peut être déplacé sensiblement transversalement à l'axe de rotation (x).

11. Machine-outil à main (100) selon la revendication 10, dans laquelle la conversion du mouvement longitudinal de la tige de commutation (166) en un mouvement transversal du commutateur à bascule (168) s'effectue par l'intermédiaire d'un circuit à coulisse (170).

12. Machine-outil à main (100) selon l'une quelconque des revendications 1 à 11, dans laquelle le deuxième élément de commutation (160) commande une deuxième unité de commutation (190) qui transmet électroniquement la position du deuxième élément de commutation (160) à la première unité de commutation (130), dans laquelle la position du deuxième élément de commutation (160) peut être détectée par un capteur fonctionnant notamment par induction, de manière capacitive, de manière magnétique et/ou de manière optique.

13. Machine-outil à main (100) selon les revendications 1 à 12, dans laquelle le deuxième élément de commutation (160) comporte plusieurs parties (161, 162, 163), dans laquelle les parties (161, 162, 163) sont disposées sur la face externe du boîtier, sont reliées à une tige de commutation (166) à l'intérieur du boîtier (110) et font respectivement saillie hors du boîtier (110) dans des directions différentes.

14. Machine-outil à main (100) selon l'une quelconque des revendications 1 à 13, dans laquelle le deuxième élément de commutation (160) comporte au moins deux parties (162, 163), dans laquelle les deux parties (162, 163) sont disposées sensiblement parallèlement et de manière opposée l'une à l'autre le long d'un axe de rotation (x) sur la face externe du boîtier (110).

15. Machine-outil à main (100) selon l'une quelconque des revendications 1 à 14, dans laquelle le deuxième élément de commutation (160) présente une forme qui suit le contour du boîtier (110) de manière à ce que le deuxième élément de commutation puisse être commandé des deux côtés.

16. Machine-outil à main (100) selon l'une quelconque des revendications 1 à 15, dans laquelle le deuxième élément de commutation (160) s'étend au moins par sections à l'intérieur du boîtier (110).

17. Machine-outil à main (100) selon l'une quelconque des revendications précédentes, dans laquelle la machine-outil à main (100) est une visseuse, une perceuse à percussion, un outil multifonction, une perceuse, une perceuse à batterie, une visseuse à batterie et/ou une perceuse à percussion à batterie comportant une transmission (120) permettant e transmettre un couple de rotation généré par le moteur d'entraînement à un arbre d'entraînement.
